**Europäisches Patentamt**

**European Patent Office**

**Office européen des brevets**

(19)

(11) Veröffentlichungsnummer : **0 216 033**
**B1**

(12)

# EUROPÄISCHE PATENTSCHRIFT

(45) Veröffentlichungstag der Patentschrift :
17.05.89

(51) Int. Cl.⁴ : **B 64 C   9/04**

(21) Anmeldenummer : **86108915.9**

(22) Anmeldetag : **01.07.86**

(54) Klappenanordnung für einen Flugzeugtragflügel.

(30) Priorität : **29.08.85 DE 3530862**

(43) Veröffentlichungstag der Anmeldung :
**01.04.87 Patentblatt 87/14**

(45) Bekanntmachung des Hinweises auf die Patenterteilung : 17.05.89 Patentblatt 89/20

(84) Benannte Vertragsstaaten :
**FR GB IT NL**

(56) Entgegenhaltungen :
**EP—A— 0 075 966**
**FR—A— 2 351 005**
**GB—A— 2 096 551**
**US—A— 4 120 470**

(73) Patentinhaber : **Messerschmitt-Bölkow-Blohm GmbH**
**Hünefeldstrasse 1-5**
**D-2800 Bremen 1 (DE)**

(72) Erfinder : **Pohl, Ulrich**
**Am Wasser 19A**
**D-2820 Bremen 70 (DE)**
Erfinder : **Renken, Jürgen, Dr.-Ing.**
**D-2730 Freyersen Nr.12 (DE)**

EP 0 216 033 B1

**Beschreibung**

Die Erfindung betrifft eine Klappenanordnung für einen Flugzeugtragflügel, insbesondere für einen transsonischen Tragflügel für Verkehrs- und Transportflugzeuge, bei dem während des Fluges die Flügelwölbung zur Verbesserung der aerodynamischen Effektivität verändert wird, bestehend aus jeweils wenigstens einer an der Flügelhinterkante angeordneten Hochauftriebsklappe sowie wenigstens jeweils einem unter Vorspannung auf der Hochauftriebsklappe aufliegenden Spoiler.

Eine Klappenanordnung dieser Art ist aus der DE-A-31 14 143 bekannt, in der ein Verfahren angegeben ist, das der Optimierung des Reiseflugzustandes von Flugzeugen mit transsonischen Tragflügeln dient. Bei diesem bekannten Verfahren werden während des Fluges die aktuellen Daten hinsichtlich Flughöhe, Fluggewicht und Geschwindigkeit erfaßt und es wird die Wölbung des Tragflügels in der Reiseflugphase in Abhängigkeit von diesen Parametern definiert verändert. Die Wölbungsänderung wird dabei unter Verwendung des für die Lagesteuerung des Flugzeuges vorgesehenen Klappen- und Spoilersystems realisiert.

Im Zusammenhang mit diesem Verfahren ist bereits vorgeschlagen worden, zur Erzielung eines optimalen Konturausgleichs zwischen den an der Tragflügelhinterkante angeordneten Hochauftriebsklappen, deren Position zur Herbeiführung einer Wölbungsänderung verändert wird, und den diesen benachbart angeordneten Spoilern, letztere unter Vorspannung, auf den Hochauftriebsklappen aufliegen zu lassen. Auf diese Weise wird insbesondere vermieden, daß beim Verfahren der Hochauftriebsklappen zwischen diesen und den jeweils zugeordneten Spoilern ein Spalt entsteht, der die Anströmbedingungen für den Tragflügel nachteilig beeinflussen würde.

Darüberhinaus ist auch aus der US-A-4 120 470 eine Klappenanordnung für einen Flugzeugtragflügel bekannt, bei der ebenfalls ein Spoiler unter Vorspannung auf einer Hochauftriebsklappe aufliegt.

Schließlich ist aus der FR-A-2 351 005 eine Klappenkonfiguration für ein Flugzeug mit Kurzstart- und -landeeigenschaften bekannt, bei der eine in einer fest voreingestellten Position gehaltene Abdeckplatte mit ihrem rückwärtigen Endbereich auf der Oberseite einer Hinterkantenklappe eines Tragflügels aufliegt. Die Platte ist dabei in diesem Endbereich mit einer sich über die gesamte Plattenbreite erstreckenden, aus einem mit einem Schmiermittel getränkten Kunststoff bestehenden Dichtleiste versehen, die dem Zweck dient, den zwischen der Platte und der darunter angeordneten Flügelklappe befindlichen Bereich auch dann abzudichten, wenn sich die Platte aufgrund der Saugwirkung des in der Start- und Landephase über die Tragfläche geleiteten Triebwerksstrahls abheben sollte.

Aufgabe der Erfindung ist es, eine Anordnung der eingangs genannten Art so auszubilden, daß Funktionsstörungen sowie Ausfälle durch vorzeitiges Materialversagen infolge von Reibung zuverlässig ausgeschlossen werden, ohne daß hierdurch die Strömungsverhältnisse im Bereich der Flügelhinterkante nachhaltig verändert bzw. beeinträchtigt werden.

Diese Aufgabe wird erfindungsgemäß dadurch gelöst, daß in dem der Hochauftriebsklappe gegenüberliegenden Bereich des Spoilers wenigstens ein reibungsverminderndes Führungselement angeordnet ist, das sich auf der Oberfläche der Hochauftriebsklappe abstützt und der Spoiler im Bereich hinter dem Führungselement elastisch verformbar ausgebildet ist.

Dadurch wird eine vorzeitige Materialschwächung als Folge von im Kontaktbereich zwischen dem Spoiler und der Hochauftriebsklappe auftretenden Beanspruchung der Oberflächen infolge Reibung vermieden, insbesondere das Auftreten von zu vorzeitigen Versagen der Komponenten führenden Oberflächenrissen. Darüberhinaus ist bei der Klappenanordnung gemäß der Erfindung eine Funktionsstörung, die insbesondere beim Wiedereinschwenken der Hochauftriebsklappen durch den auftretenden Reibungswiderstand hervorgerufen werden könnte, von vornherein ausgeschlossen.

Vorteilhafte Weiterbildungen der erfindungsgemäßen Klappenanordnung, die insbesondere eine möglichst einfache konstruktive Auslegung sowie einen optimalen Konturausgleich zum Ziel haben, sind in den Unteransprüchen angegeben.

Im folgenden soll die Erfindung anhand zweier in der Zeichnung dargestellter Ausführungsbeispiele näher erläutert werden.

Es zeigen :

Fig. 1 einen Schnitt durch ein erstes Ausführungsbeispiel der erfindungsgemäßen Klappenanordnung,

Fig. 2 einen Schnitt durch ein zweites Ausführungsbeispiel einer Klappenanordnung gemäß der Erfindung und

Fig. 3 einen Detailschnitt durch ein drittes Ausführungsbeispiel einer erfindungsgemäßen Klappenanordnung.

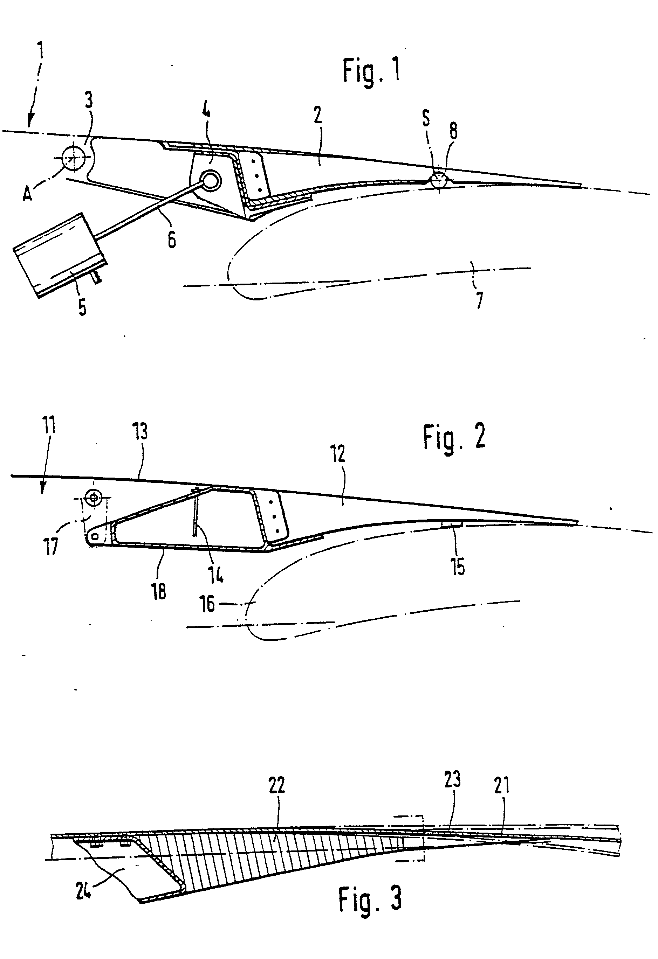

In den Figuren ist jeweils ein Profilschnitt durch den Hinterkantenbereich eines transsonischen Tragflügels 1 bzw. 11 dargestellt. Am Hinterholm des Tragflügels 1 ist in Fig. 1 ein Spoiler 2 angeordnet, der über einen ersten Beschlag 3 um eine Achse A schwenkbar gehaltert ist. An einem zweiten Beschlag 4 des Spoilers 2 greift unter einem Abstand zur Schwenkachse A ein Stellglied, im Fall des hier dargestellten Ausführungsbeispiels der Erfindung ein hydraulisches Kolbensystem mit einer Kolbenstange 6, an. Die Oberseite des Spoilers 2 ist dabei so ausgebildet, daß sie in der in der Zeichnung dargestellten eingefahrenen Positio des Spoilers die Kontur des Tragflügels 1 in rückwärtiger Richtung fortsetzt.

Die Unterseite des Spoilers 2 liegt dem Vorder-

kantenbereich einer ebenfalls am Flügelhinter-holm angeordneten Klappe, in diesem Fall einer Hochauftriebsklappe 7, gegenüber, die ihrerseits den rückwärtigen Abschluß der Tragflügelkontur bildet. Diese Hochauftriebsklappe 7 ist durch ein hier nicht näher dargestelltes Antriebs- und Führungssystem nach Art einer an sich bekannten Schienenkinematik in bezug auf den Flügelhinter-holm ein- und ausfahrbar gehalten, wobei der Bahnverlauf der Schienenkinematik so gewählt ist, daß mit der linearen Ausfahrbewegung zu-gleich eine Schwenkbewegung der Hochauftrieb-sklappe 7 verbunden ist.

Schließlich ist in dem der Hochauftriebsklappe 7 gegenüberliegenden Bereich des Spoilers 2 ein Führungselement in Form einer Stützrolle 8 angeordnet. Die Drehachse S dieser Stützrolle 8 liegt dabei innerhalb der Kontur des Spoilers 2, so daß nur der kleinere Teil der Querschnittsfläche der Stützrolle 8 aus dem Spoiler 2 herausragt. Die Einbautiefe der Stützrolle 8 ist so gewählt, daß einerseits der hintere Endbereich des Spoilers 2 möglichst nahe an der Hochauftriebsklappe 7 liegt, er diese jedoch nicht berührt. Der Spoiler 2 ist hinter der Stützrolle 8 elastisch verformbar und wird durch das hydraulische Stellglied 5 gegenüber der Hochauftriebsklappe 7 unter Vorspannung gehalten. Angemerkt sei dabei, daß dieses Stellglied 5 zugleich auch zum Aus- und Einfahren des Spoilers 2 beim konventionellen Einsatz, also beispielsweise im Landeanflug, verwendet wird.

Während der Reiseflugphase bewirkt die vom hydraulischen Stellglied 5 aufgebrachte Vorspannung, daß auch bei einem Verstellen der Hochauftriebsklappe 7 zum Zweck der Wölbungsveränderung des Tragflügels und damit zur Verbesserung seiner aerodynamischen Effektivität der Spoiler 2 so nachgeführt wird, daß er dicht auf der Hochauftriebsklappe 7 aufliegt und die Bildung eines Spaltes zwischen Spoiler und Hochauftriebsklappe vermieden wird. Zugleich bewirkt die Stützrolle 8, daß bei diesem Vorgang kleine Reibungskräfte auftreten.

Die in Fig. 2 dargestellte Anordnung unterscheidet sich von der vorstehend beschriebenen im wesentlichen in zweierlei Hinsicht : Zum einen ist in diesem Fall zwischen Hinterholm des Tragflügels 11 und der Vorderkante des Spoilers 12 eine konturvermittelnde Platte 13 vorgesehen, die ebenso wie der Spoiler 12 elastisch verformbar ausgebildet ist und die durch eine mit einem einstellbaren Anschlag versehene Zugstange 14 gegenüber dem Spoiler 12 unter Vorspannung gehalten wird. Dadurch wird erreicht, daß auch der Übergang zwischen dem Tragflügel 11 und dem Spoiler 12 ohne jede Störung der aerodynamischen Kontur verläuft.

Der zweite Unterschied gegenüber der in Fig. 1 dargestellten Anordnung liegt darin, daß in diesem Fall an Stelle einer Führungsrolle ein Gleitklotz 15 als reibungsverminderndes Element zwischen dem Spoiler 12 und der Hochauftriebsklappe 16 vorgesehen ist. Da außerdem im Fall der Fig. 2 der Schnitt durch das Tragflügelprofil in Spannweitenrichtung an einem anderen Punkt erfolgte, ist in dieser Figur anstelle des — auch hier vorhandenen — hydraulischen Stellgliedes eine Pendelstütze 17 abgebildet, über die der Spoiler 12 mittels eines Beschlages 18 an der festen Flügelstruktur angelenkt ist.

Die Wirkungsweise dieser Anordnung entspricht vollständig derjenigen der in Fig. 1 beschriebenen. Auch hier folgt der Spoiler 12 aufgrund der aufgebrachten Vorspannung der Bewegung der Hochauftriebsklappe 16, wobei der Gleitklotz 15 das Auftreten von Reibungskräften verhindert. Hinzu kommt in diesem Fall noch der durch die ebenfalls unter Vorspannung auf dem Spoiler 12 aufliegende Platte 13 bewirkte Konturausgleich im Bereich der Spoilervorderkante.

Schließlich zeigt Fig. 3 einen Schnitt durch den Übergangsbereich zwischen einem Spoiler 22 und einer Hochauftriebsklappe 21 einer weiteren Klappenanordnung gemäß der Erfindung. Im Fall dieses Ausführungsbeispiels ist eine zusätzliche konturausgleichende Platte 23 oberhalb des Spoilers 22 angeordnet. Diese Platte 23, die einen vergleichsweise sehr dünnen Querschnitt aufweist, ist mit ihrem vorderen Ende an einem den Spoiler 22 tragenden Beschlag 24 gehalten. Ihr rückwärtiges Ende ist frei beweglich und liegt federnd auf der Oberseite der Hochauftriebsklappe 21 auf. Dadurch ist ein praktisch ungestörter Konturübergang zwischen dem Spoiler 22 und der Hochauftriebsklappe 21 auch bei einer Veränderung der Klappenposition in der Reiseflugphase gewährleistet.

**Patentansprüche**

1. Klappenanordnung für einen Flugzeugtragflügel, insbesondere für einen transsonischen Tragflügel (1, 11) für Verkehrs- und Transportflugzeuge, bei dem während des Fluges die Flügelwölbung zur Verbesserung der aerodynamischen Effektivität verändert wird, bestehend aus jeweils wenigstens einer an der Flügelhinterkante angeordneten Hochauftriebsklappe (7, 16, 21) sowie wenigstens jeweils einem unter Vorspannung auf der Hochauftriebsklappe aufliegenden Spoiler (2, 12, 22), dadurch gekennzeichnet, daß in dem der Hochauftriebsklappe (7, 16, 21) gegenüberliegenden Bereich des Spoilers (2, 12, 22) wenigstens ein reibungsverminderndes Führungselement (8, 15) angeordnet ist, das sich auf der Oberfläche der Hochauftriebsklappe (7, 16, 21) abstützt und der Spoiler (2, 12, 22) im Bereich hinter dem Führungselement elastisch verformbar ausgebildet ist.

2. Klappenanordnung nach Anspruch 1, dadurch gekennzeichnet, daß zwischen der Vorderkante des Spoilers (12) und dem Hinterholm des Tragflügels (11) zusätzlich eine ebenfalls elastisch verformbare Abdeckplatte (13) unter Vorspannung angeordnet ist, die an der Hinterkante des Tragflügels (11) gehalten ist.

3. Klappenanordnung nach Anspruch 1 oder 2, dadurch gekennzeichnet, daß am Spoiler (22) eine Platte (23) angeordnet ist, deren vorderes Ende am Spoiler (22) befestigt ist und deren rückwärtiges Ende sich über den Spoiler (22) hinaus erstreckt und unter Vorspannung auf der Oberseite der Hochauftriebsklappe (21) aufliegt.

## Claims

1. Flap arrangement for an aircraft wing, particularly for a transonic wing (1, 11) for passenger and transport aircraft, in which during the flight the wing curvature is altered to improve the aerodynamic efficiency, comprising in each case at least one high-lift flap (7, 16, 21) arranged on the trailing wing edge and at least one respective spoiler (2, 12, 22) resting under pre-tension on the high-lift flap characterised in that in the region of the spoiler (2, 12, 22) located opposite to the high-lift flap (7, 16, 21) there is arranged at least one friction reducing guide element (8, 15), which is supported on the surface of the high-lift flap (7, 16, 21) and the spoiler (2, 12, 22) is constructed to be elastically deformable in the region rearward of the guide element.

2. Flap arrangement according to claim 1, characterised in that between the leading edge of the spoiler (12) and the rear spar of the wing (11) there is additionally arranged under pretension a cover plate which is also elastically deformable and which is mounted on the trailing edge of the wing (11).

3. Flap arrangement according to claim 1 or 2, characterised in that on the spoiler (22) there is arranged a plate (23) of which the leading end is fixed to the spoiler (22) and of which the rearward end extends beyond the spoiler (22) and rests under pretension on the top side of the high-lift flap (21).

## Revendications

1. Disposition de volets pour une aile porteuse d'avions, en particulier pour une aile porteuse transsonique (1, 11) pour avions commerciaux et de transport, dans laquelle la courbure d'aile est modifiée pendant le vol pour améliorer l'efficacité aérodynamique, aile se composant chaque fois d'au moins un volet hypersustentateur (7, 16, 21) disposé sur le bord de fuite d'aile, ainsi que chaque fois d'au moins un volet dénommé spoiler (2, 12, 22) appuyant sous précontrainte sur le volet hypersustentateur, caractérisé en ce qu'au moins un élément de guidage (8, 15) diminuant le frottement est disposé dans la zone du spoiler (2, 12, 22) opposée au volet hypersustentateur (7, 16, 21), élément de guidage s'appuyant sur la surface du volet hypersustentateur (7, 16, 21) et le spoiler (2, 12, 22) étant réalisé de manière élastiquement déformable dans la zone située derrière l'élément de guidage.

2. Dispositif de volets selon la revendication 1, caractérisé en ce qu'en plus, une plaque de recouvrement (13) également élastiquement déformable est disposée sous précontrainte entre le bord d'attaque du spoiler (12) et le longeron arrière de l'aile porteuse (11), plaque de recouvrement maintenue sur le bord de fuite de l'aile (11).

3. Dispositif de volets selon la revendication 1 ou 2, caractérisé en ce qu'une plaque (23) est disposée sur le spoiler (22), plaque dont l'extrémité avant est fixée au spoiler (22) et dont l'extrémité arrière s'étend sur le spoiler (22) et appuie sous précontrainte sur le côté avant du volet hypersustentateur .

Fig. 1

1

3

A

4

2

S

8

6

5

7

Fig. 2

11

13

12

17

18

14

16

15

Fig. 3

22

23

21

24

1